# FASCICULE DE BREVET EUROPEEN

(11) **EP 4 185 460 B1**
(45) Date de publication et mention de la délivrance du brevet: **25.12.2024**
(21) Numéro de dépôt: 21742446.4
(22) Date de dépôt: 20.07.2021
(51) Int. Cl.: B30B 11/22, B30B 11/24, B30B 15/34, A23J 3/22, A23J 3/26, B29C 48/33, B29C 48/25, A23P 30/20, B29C 48/00, B29C 48/86, B29C 48/40

(54) **FILIÈRE POUR L'EXTRUSION D'UNE MATIÈRE RICHE EN PROTÉINES ET EN EAU, AINSI QUE MACHINE D'EXTRUSION COMPORTANT UNE TELLE FILIÈRE**
DÜSE ZUM EXTRUDIEREN EINES PROTEIN- UND WASSERREICHEN MATERIALS SOWIE EXTRUSIONSMASCHINE MIT SOLCH EINER DÜSE
NOZZLE FOR EXTRUDING A MATERIAL RICH IN PROTEIN AND WATER, AS WELL AS AN EXTRUSION MACHINE COMPRISING SUCH A NOZZLE

(30) Priorité: 21.07.2020 FR 2007642
(43) Date de publication de la demande: 31.05.2023
(73) Titulaire: Clextral, 42700 Firminy (FR)
(72) Inventeur: BEYRER, Michael, 3960 SIERRE/SIDERS (CH); CACHELIN, Christian, 1965 SAVIESE (CH); RAPILLARD, Laurent, 1964 CONTHEY (CH)
(74) Mandataire: Lavoix
(86) Numéro de dépôt international: PCT/EP2021/070271
(87) Numéro de publication internationale: WO 2022/018084

(56) Documents cités:
- EP-A1- 0 213 204
- WO-A1-2017/050811
- WO-A1-2020/144407
- DE-U- 6 806 402
- FR-A1- 2 213 846
- JP-A- 2002 113 764
- KR-B1- 100 982 950
- US-A- 2 919 467

## Description

La présente invention concerne une filière pour l'extrusion d'une matière riche en protéines et en eau. Elle concerne également une machine d'extrusion comportant une telle filière. Elle concerne aussi un système de préparation en continu d'un produit alimentaire extrudé.

L'invention s'intéresse aux machines d'extrusion comportant un fourreau à l'intérieur duquel une ou plusieurs vis, notamment deux vis, sont entraînées en rotation sur elles-mêmes de sorte qu'elles entraînent une matière à extruder depuis une partie amont du fourreau jusqu'à l'extrémité aval du fourreau où la matière est alors forcée de s'écouler à travers une filière d'extrusion, prévue pour mettre en forme, texturer et/ou fibrer la matière extrudée. Une telle machine d'extrusion applique un traitement thermomécanique à la matière, dans le sens où cette matière subit à la fois une transformation essentiellement mécanique, par mise en pression et par cisaillement par les vis, et une transformation essentiellement thermique, par régulation de la température le long du fourreau.

L'invention concerne plus spécifiquement l'extrusion de matières riches en protéines et en eau et les machines d'extrusion agroalimentaire associées qui permettent de préparer en continu un produit alimentaire texturé à partir d'une matière première riche en protéines. Les protéines de la matière première peuvent notamment être d'origine animale et/ou d'origine végétale. Dans tous les cas, les protéines sont mélangées avec une proportion importante d'eau, ainsi que, éventuellement, des matières grasses et des additifs, et le mélange correspondant est soumis au traitement thermomécanique qu'applique la machine d'extrusion afin d'être chauffé puis gélifié avant d'être mis en forme dans la filière. La texturation, autrement appelée fibration, du produit alimentaire se produit essentiellement dans la filière de la machine d'extrusion, que la matière sortant du fourreau de cette machine traverse en étant poussée par les vis de la machine. Ce procédé de préparation de produits alimentaires à base de protéines fibrées est connu sous le nom de « CEMH » qui est l'acronyme de l'expression « Cuisson-Extrusion en Milieu Humide », ainsi que sous le nom de « HME » qui est l'acronyme de l'expression anglaise « High Moisture Extrusion ».

WO 03/007729 divulgue un procédé CEMH et une machine d'extrusion associée, dans lesquels la filière est prévue pour refroidir de manière régulée la matière la traversant, en faisant s'écouler cette matière dans un canal qui présente à la fois une grande longueur, typiquement de plusieurs mètres, et une section rectangulaire, un profil de température étant appliqué le long de ce canal de manière à diminuer la température de la matière progressivement entre l'entrée et la sortie du canal. La matière en contact avec la paroi refroidie du canal tend à adhérer à cette paroi, ce qui permet de cisailler l'écoulement laminaire de matière dans le canal. Ce cisaillement contribue à développer des lignes de courant au sein de la pâte de matière et tend à aligner des macromolécules dénaturées dans la direction de l'écoulement. En pratique, le taux de cisaillement et le régime d'écoulement résultent de la géométrie fixe du canal, de sorte que la maîtrise de la fibration nécessite que le canal et, par-là, le temps de traitement dans la filière soit long.

Dans un domaine différent de celui de l'invention, à savoir l'extrusion de matière plastique ou de caoutchouc, FR 2 213 846 et JP 2002 113764 divulguent des filières en « tête d'équerre », comprenant une enveloppe externe à l'intérieur de laquelle est agencé coaxialement un organe interne en définissant un canal d'écoulement de la matière extrudée. L'organe interne est entrainé en rotation autour de l'axe commun depuis une partie amont de cet organe interne, tandis que, du côté aval, la matière sort de la filière en étant façonnée en un produit tubulaire. De même, WO 2020/144407 divulgue une filière dont une partie interne est liée en rotation avec un rotor d'une extrudeuse, tout en définissant, vis-à-vis d'un anneau externe fixe de la filière, un canal par lequel la matière extrudée s'écoule avant de sortir de la filière par des sorties radiales de cet anneau externe. Dans la mesure où la matière s'écoule suivant un trajet coudé dans ces différentes filières, ces dernières sont structurellement incapables d'être traversées par une matière riche protéines et en eau, qui, lors de son traitement par extrusion, va progressivement se gélifier moyennant l'apparition et le développement de fibres longues.

EP 0213 204 A1 divulgue une filière d'extrusion de produits alimentaires possédant une enveloppe externe tubulaire thermorégulée. US 2 919 467 A divulgue quant à lui une filière pour l'extrusion de matière plastique possédant une enveloppe externe tubulaire thermorégulée étant centrée sur un axe et un organe interne qui est agencé coaxialement à l'intérieur de l'enveloppe externe et est monté rotatif autour de l'axe par rapport à l'enveloppe externe, de manière qu'une partie aval de l'organe interne s'étende à l'extérieur de l'enveloppe externe et soit en prise avec une motorisation adaptée pour entraîner l'organe interne en rotation autour de l'axe.

Le but de la présente invention est de proposer une nouvelle filière pour l'extrusion d'une matière riche en protéines et en eau, qui soit moins encombrante, ainsi que plus performante vis-à-vis de la fibration du produit sortant de la filière.

A cet effet, l'invention a pour objet une filière telle que définie à la revendication 1.

L'invention a également pour objet une machine d'extrusion, telle que définie à la revendication 10.

L'invention a aussi pour objet un système de préparation en continu d'un produit alimentaire extrudé, tel que défini à la revendication 12.

Une des idées à la base de l'invention est de concevoir une filière d'extrusion qui, tout en assurant un bon échange thermique avec la matière la traversant, permet d'ajuster le taux de cisaillement appliqué à l'écoulement de cette matière dans la filière, en rendant alors possible d'utiliser ce taux de cisaillement réglable comme paramètre de pilotage de la filière. Pour ce faire, la filière définit un canal dans lequel la matière traversant la filière s'écoule, ce canal présentant une section transversale annulaire et étant délimité par l'agencement coaxial d'une enveloppe externe tubulaire et d'un organe interne. L'enveloppe externe est thermorégulée de sorte que sa face intérieure contre laquelle s'écoule la matière dans le canal peut être refroidie comparativement à la température de la matière, ce qui fait que la matière tend à adhérer à cette face intérieure de l'enveloppe externe. Le transfert thermique entre l'enveloppe externe et la matière s'écoulant dans le canal est substantiel, du fait de la surface de contact cylindrique étendue entre la matière et la face intérieure de l'enveloppe externe. Dans le même temps, l'organe interne est monté rotatif autour de l'axe central de la filière de sorte que, en entraînant en rotation l'organe interne par rapport à l'enveloppe externe, la matière qui s'écoule dans le canal tend à s'enrouler autour de la face extérieure de l'organe interne. La matière s'écoulant dans le canal se retrouve ainsi fortement cisaillée entre la face intérieure refroidie de l'enveloppe extérieure et la face externe rotative de l'organe interne, et ce avec un taux de cisaillement qui est réglable par changement de la vitesse et/ou du sens de rotation de l'organe interne et/ou par ajustement de la thermorégulation de l'enveloppe externe. La filière conforme à l'invention permet ainsi d'obtenir et de commander finement la fibration de la matière s'écoulant dans le canal et donc la fibration du produit sortant de la filière, c'est-à-dire du produit alimentaire extrudé qui est préparé en continu par le système conforme à l'invention, tout en notant que la filière est compacte, c'est-à-dire peu encombrante suivant la direction de son axe central.

Des caractéristiques additionnelles avantageuses de l'invention sont spécifiées aux autres revendications.

L'invention sera mieux comprise à la lecture de la description qui va suivre, donnée uniquement à titre d'exemple et faite en se référant aux dessins sur lesquels :
[Fig. 1] la figure 1 est une vue en perspective d'une machine d'extrusion conforme à l'invention ;
[Fig. 2] la figure 2 est une vue similaire à la figure 1, illustrant une partie de la machine d'extrusion de la figure 1, incluant une filière conforme à l'invention ;
[Fig. 3] la figure 3 est une coupe longitudinale schématique partielle de la machine d'extrusion de la figure 1, dans le plan III de la figure 1 ;
[Fig. 4] la figure 4 est une coupe selon la ligne IV-IV de la figure 3 ; et
[Fig. 5] la figure 5 est une coupe selon la ligne V-V de la figure 3.

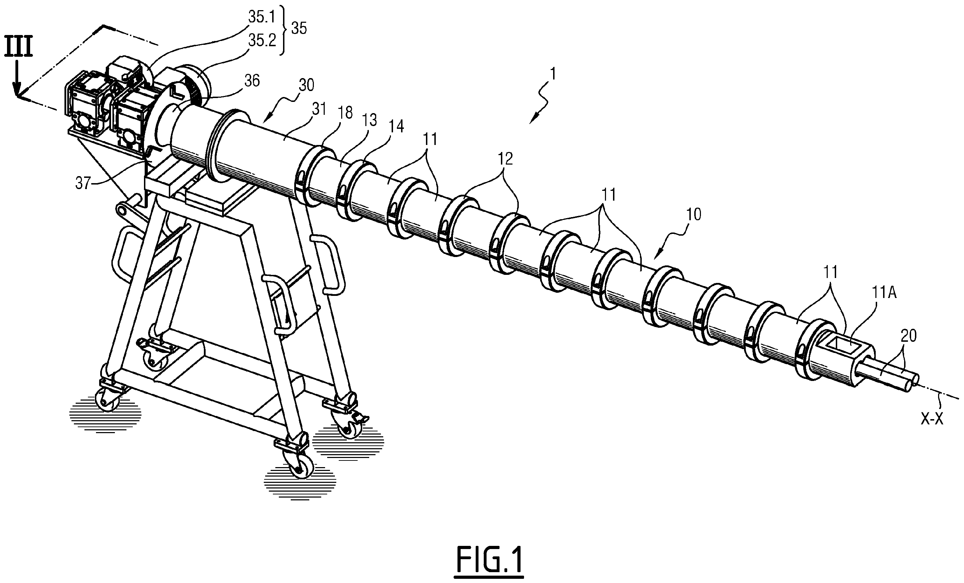

Sur les figures 1 à 5 est représentée de manière schématique une machine d'extrusion 1.

Cette machine d'extrusion 1 est prévue pour opérer une extrusion agroalimentaire, en extrudant en continu un produit alimentaire destiné à l'alimentation humaine et/ou animale, à partir d'une matière première riche en protéines et en eau.

La machine d'extrusion 1 est plus spécifiquement prévue pour extruder une matière riche en protéines et en eau, en préparant en continu un produit alimentaire texturé, autrement dit fibré. Plus précisément, la matière première, c'est-à-dire l'ensemble des ingrédients qui sont traités par la machine d'extrusion 1 pour former le produit alimentaire, et la matière extrudée, c'est-à-dire la matière obtenue en sortie de la machine d'extrusion 1, contiennent majoritairement de l'eau et des protéines, ainsi que, minoritairement voire marginalement, des fibres alimentaires et/ou de l'amidon, ainsi qu'éventuellement des matières grasses et des additifs.

La matière extrudée comprend ainsi entre 25 et 90% en poids, de préférence entre 50 et 85% en poids, d'eau et comprend également, en poids sur la totalité de la matière sèche, entre 20 et 90% de protéines. Ces protéines sont d'origine végétale et/ou d'origine animale et/ou d'au moins une autre origine. Les protéines d'origine végétale proviennent par exemple des légumineuses, des céréales et/ou des protéagineux (soja, blé, pois, maïs, pois chiches, lentilles, etc.). Les protéines d'origine animale sont par exemple issues du poisson, de la viande, du lait et/ou des oeufs. La ou les autres origines de protéines sont par exemple les champignons, les algues, les insectes, la viande cellulaire, etc.

La matière extrudée comprend également, en poids sur la totalité de la matière sèche, entre 0 et 50% de fibres alimentaires et entre 0 et 50% d'amidon, la somme des fibres alimentaires et/ou d'amidon étant supérieure à 0,01 %. Les fibres alimentaires sont par exemple des fibres d'origine végétale et l'amidon est par exemple d'origine végétale, à l'état natif, prégélatinisé ou modifié.

La matière extrudée peut aussi comprendre entre 0 et 20% de matières grasses, notamment d'origine végétale et/ou animale, et/ou des ingrédients fonctionnels, comme les lécithines, les caséinates ou d'autres ingrédients.

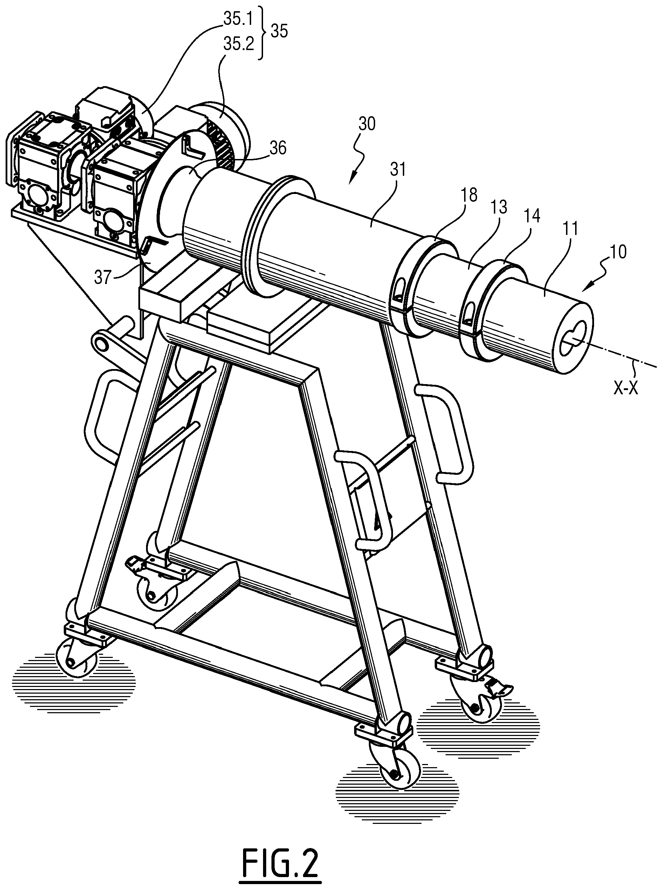

La machine d'extrusion 1 comporte un fourreau 10 de forme allongée, qui s'étend le long d'un axe géométrique X-X et qui est centré sur cet axe. A l'intérieur du fourreau 10, deux vis 20 s'étendent de manière parallèle à l'axe X-X, en étant reçues dans un alésage longitudinal complémentaire du fourreau, centré sur l'axe X-X. En pratique, de manière connue en soi, chaque vis inclut par exemple un arbre de vis central 21 sur lequel est monté un ensemble d'éléments de vis 22. Les vis s'étendent de part et d'autre de l'axe X-X, tout en étant interpénétrantes, l'alésage du fourreau présentant ainsi un profil transversal bilobé, comme bien visible sur la figure 2 sur laquelle les vis 20 sont omises.

Les vis 20 sont prévues pour être entraînées en rotation sur elles-mêmes, autour de leur axe central, par une unité motrice, non représentée sur les figures, en prise avec l'extrémité amont des vis, à savoir celle de droite sur la figure 1, émergeant à l'extérieur du fourreau 10.

Les vis 20 sont conçues, de par leur profil fileté, pour entraîner la matière première à l'intérieur du fourreau 10 selon l'axe X-X, depuis une partie amont du fourreau 10, dans laquelle les ingrédients de cette matière sont introduits à l'intérieur de l'alésage longitudinal central du fourreau, jusqu'à l'extrémité aval du fourreau 10, les termes « amont » et « aval » étant orientés dans le sens de progression de la matière à l'intérieur du fourreau sous l'action des vis 20, ce sens de progression étant de la droite vers la gauche sur les figures 1 à 4.

Le fourreau 10 comporte plusieurs éléments modulaires 11 se succédant le long de l'axe X-X. Chacun des éléments 11 délimite intérieurement une partie correspondante de l'alésage longitudinal central du fourreau 10, ces parties d'alésage étant dans le prolongement les unes des autres, selon l'axe X-X, à l'état assemblé des éléments 11, comme sur les figures. En pratique, les éléments 11 sont assemblés deux à deux par des colliers de fixation 12.

Dans l'exemple de réalisation considéré sur les figures, l'élément le plus en amont parmi les éléments 11 permet d'introduire, à l'intérieur de sa partie d'alésage centrale, les ingrédients de la matière première. A cet effet, de manière connue en soi et non détaillée ici, cet élément le plus en amont parmi les éléments 11 est pourvu d'un orifice traversant 11A qui, transversalement à l'axe X-X, ouvre sur l'extérieur la partie d'alésage centrale de cet élément. Plus généralement, on comprend que, parmi les différents éléments 11 du fourreau 10, un ou plusieurs d'entre eux permettent d'introduire, à l'intérieur de l'alésage longitudinal central du fourreau 10, les ingrédients, solides et/ou liquides, de la matière à extruder par la machine d'extrusion 1.

Comme évoqué dans la partie introductive du présent document, les vis 20 sont conçues pour, en plus d'entraîner la matière à extruder, cisailler et mettre en pression cette matière, de manière à la transformer de manière essentiellement mécanique. Cet aspect de la machine d'extrusion 1 étant bien connu dans le domaine, il ne sera pas décrit ici plus avant. De même, également comme évoqué dans la partie introductive, le fourreau 10 est conçu pour réguler la température de la matière à extruder le long du fourreau de façon à transformer cette matière de manière essentiellement thermique. A cet effet, tout ou partie des éléments 11 du fourreau 10 sont thermorégulés et/ou permettent d'injecter dans le fourreau de la vapeur et/ou permettent de dégazer la matière en cours d'extrusion dans le fourreau. Là encore, cet aspect de la machine d'extrusion 1 étant bien connu dans le domaine, il ne sera pas décrit ici plus avant. Plus globalement, le fourreau 10 et les vis 20 sont prévus pour appliquer un traitement thermomécanique à la matière première au fur et à mesure de la progression de cette matière de l'extrémité amont du fourreau jusqu'à l'extrémité aval du fourreau.

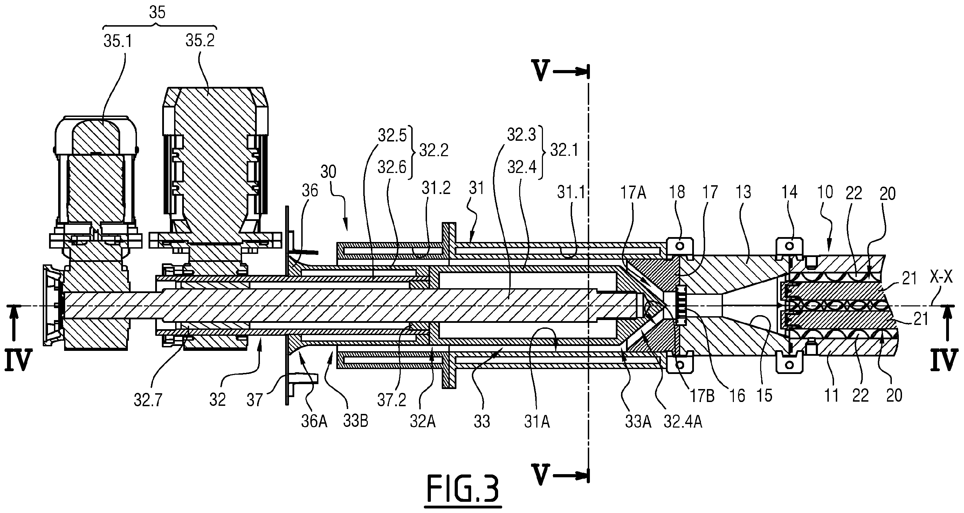

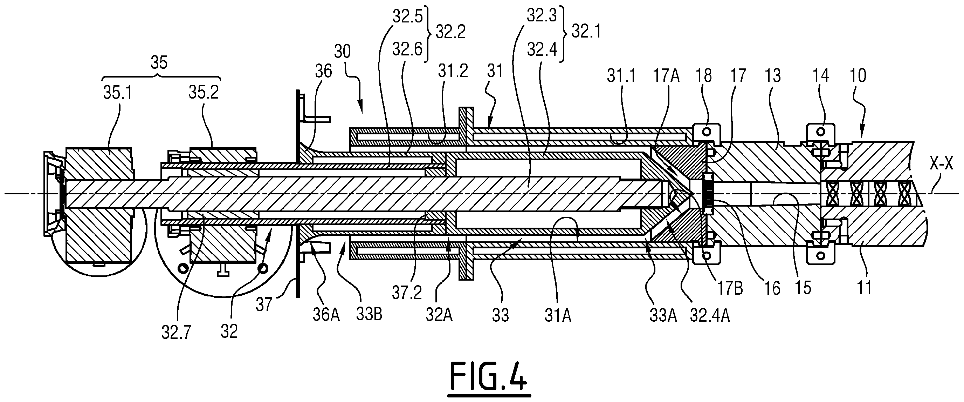

A son extrémité aval, le fourreau 10 comprend une plaque terminale 13, couramment appelée « plaque avant » dans le domaine. La plaque terminale 13 est rapportée fixement, par exemple par un collier de fixation 14, à l'extrémité aval de l'élément le plus en aval, parmi les éléments 11, du fourreau 10. Comme bien visible sur les figures 3 et 4, la plaque terminale 13 délimite intérieurement un alésage 15 traversant, qui est centré sur l'axe X-X, en s'étendant dans le prolongement axial de la partie d'alésage central de l'élément le plus en aval parmi les éléments 11, et qui reçoit l'extrémité aval des vis 20. Cet alésage 15 est adapté pour canaliser la matière poussée vers l'aval par les vis 20 de manière à assurer une mise en pression et un taux de remplissage appropriés pour l'alésage longitudinal central du fourreau 10. A cet effet, l'alésage 15 est, par exemple, au moins partiellement étranglé vers l'aval et pourvu d'une grille transversale 16. Cet aspect de la machine d'extrusion 1 n'étant pas limitatif de l'invention, il ne sera pas décrit ici plus avant.

La machine d'extrusion 1 comprend également une filière 30 qui, à l'état assemblé de la machine d'extrusion 1, est agencée à l'extrémité aval du fourreau 10. La filière 30 est prévue pour être traversée par la matière traitée par la machine d'extrusion 1 aux fins de l'extrusion de cette matière. Ainsi, à l'état assemblé de la machine d'extrusion 1, la matière sortant du fourreau 10 est forcée, sous l'action des vis 20, de s'écouler à travers la filière 30.

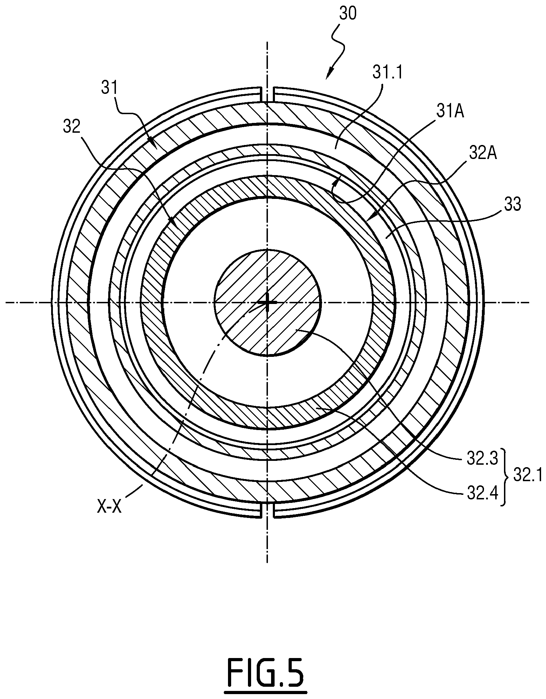

Comme bien visible sur les figures 3 à 5, la filière 30 comporte principalement une enveloppe externe 31 et un organe interne 32. L'enveloppe externe 31 est tubulaire, en étant centrée sur un axe géométrique qui, à l'état assemblé de la machine d'extrusion 1, est confondu avec l'axe X-X et qui sera donc considéré comme étant l'axe X-X par la suite. L'organe interne 32 présente une forme allongée, centrée sur un axe géométrique qui, à l'état assemblé de la machine d'extrusion 1, est confondu avec l'axe X-X et qui sera donc considéré comme étant l'axe X-X par la suite. L'organe interne 32 est agencé coaxialement à l'intérieur de l'enveloppe externe 31, de sorte que, radialement entre l'enveloppe externe 31 et l'organe interne 32, est délimité un canal 33 ayant une section transversale, c'est-à-dire une section en coupe perpendiculaire à l'axe X-X, qui est annulaire et centrée sur l'axe X-X. Le canal 33 s'étend ainsi suivant l'axe X-X depuis une extrémité amont 33A du canal 33, tournée vers le fourreau 10, jusqu'à une extrémité aval 33B du canal, opposée au fourreau 10. Comme bien visible sur la figure 5, le canal 33 s'étend continûment autour de l'axe X-X, c'est-à-dire sur 360°. En service, la matière, provenant du fourreau 10 et traversant la filière 30, s'écoule dans le canal 33, en y progressant de l'extrémité amont 33A à l'extrémité aval 33B.

De par sa forme tubulaire, l'enveloppe externe 31 présente une face intérieure 31A, c'est-à-dire une face tournée vers l'axe X-X, qui délimite le canal 33, en en formant la périphérie extérieure, et ce de l'extrémité amont 33A à l'extrémité aval 33B de ce canal. L'organe interne 32 présente, quant à lui, une face extérieure 32A, c'est-à-dire une face tournée à l'opposé de l'axe X-X, qui délimite le canal 33, en en formant la périphérie intérieure, et ce depuis l'extrémité amont 33A jusqu'à l'extrémité aval 33B de ce canal. Dans l'exemple de réalisation considéré sur les figures, la face intérieure 31A de l'enveloppe externe 31 et la face extérieure 32A de l'organe interne 32 sont chacune cylindriques à bases circulaires, centrées sur l'axe X-X : il en résulte que la section transversale annulaire du canal 33 est constante de son extrémité amont 33A à son extrémité aval 33B.

On va maintenant décrire plus en détail l'enveloppe externe 31, avant de détailler plus loin l'organe interne 32.

L'enveloppe externe 31 est thermorégulée, c'est-à-dire qu'elle est conçue pour commander sa température de manière à, au moins localement, la maintenir à une valeur déterminée, avantageusement réglable, malgré les échanges thermiques entre l'enveloppe externe 31 et son environnement immédiat. En particulier, l'enveloppe externe 31 est ainsi prévue pour agir sur la température dans le canal 33, plus précisément sur la matière s'écoulant dans ce canal, moyennant un échange thermique entre cette matière et l'enveloppe externe 31 au travers de la face intérieure 31A de l'enveloppe externe.

Aux fins de sa thermorégulation, l'enveloppe externe 31 comporte, dans l'exemple de réalisation considéré sur les figures 1 à 5, deux conduits 31.1 et 31.2 pour la circulation d'un fluide thermorégulateur, par exemple de l'eau sous pression. Chaque conduit 31.1, 31.2 présente une forme annulaire, centrée sur l'axe X-X, et ceinture le canal 33, en étant séparé de ce dernier par une paroi thermoconductrice de l'enveloppe externe 31, qui porte la face intérieure 31A. Les conduits 31.1 et 31.2 sont distincts l'un de l'autre et se succèdent l'un à l'autre suivant l'axe X-X, le conduit 31.1 ceinturant une partie amont du canal 33, s'étendant de l'extrémité amont 33A à un niveau axial intermédiaire du canal, tandis que le conduit 31.2 ceinture une partie aval du canal 33, s'étendant du niveau axial intermédiaire précité à l'extrémité aval 33B du canal. En pratique, comme montré sur les figures, les conduits 31.1 et 31.2 sont respectivement intégrés à des modules distincts de l'enveloppe externe 31, qui se succèdent suivant l'axe X-X de manière juxtaposée. En fonctionnement, chacun des conduits 31.1 et 31.2 est alimenté par un fluide thermorégulateur et fait circuler ce dernier globalement dans la direction de l'axe X-X pour appliquer un profil de température le long de la partie du canal 33, ceinturée par le conduit correspondant, notamment de manière à refroidir la matière s'écoulant dans le canal 33 au fur et à mesure de la progression de cette matière dans le canal. Bien entendu, la filière 30 comporte, pour chacun des conduits 31.1 et 31.2, une arrivée de fluide thermorégulateur, qui permet d'alimenter le conduit depuis l'extérieur de l'enveloppe externe 31, et une sortie de fluide thermorégulateur, qui permet d'évacuer le fluide thermorégulateur vers l'extérieur de l'enveloppe externe, cette arrivée et cette sortie de fluide thermorégulateur de chaque conduit n'étant pas représentées sur les figures. Dans la mesure où les conduits 31.1 et 31.2 sont distincts, ces conduits peuvent avantageusement appliquer des profils de température respectifs qui sont différents l'un de l'autre, par exemple en prévoyant que la matière s'écoulant dans le canal 33 est refroidie de manière plus intense par échange thermique avec le fluide thermorégulateur circulant dans le conduit 31.1 que par échange thermique avec le fluide thermorégulateur circulant dans le conduit 31.2, ou inversement.

Bien entendu, la forme de réalisation, qui vient d'être décrite en lien avec les conduits 31.1 et 31.2, n'est qu'une possibilité de réalisation pour, plus généralement, des moyens de thermorégulation de l'enveloppe externe 31, adaptés pour appliquer un profil de température le long du canal 33 depuis son extrémité amont 33A à son extrémité aval 33B, notamment de manière à refroidir la matière s'écoulant dans le canal au fur et à mesure de sa progression dans ce canal.

Par ailleurs, l'enveloppe externe 31 est prévue pour être liée fixement au fourreau 10, dans le sens où, à l'état assemblé de la machine d'extrusion 1, le fourreau 10 et l'enveloppe externe 31 sont liés fixement l'un à l'autre. En pratique, l'enveloppe externe 31, en particulier une partie amont de cette dernière, est à cet effet solidarisée fixement, de manière directe ou indirecte, à une partie aval du fourreau 10, en particulier à la plaque terminale 13 de ce fourreau.

Ainsi, suivant une forme de réalisation possible qui est mise en oeuvre dans l'exemple considéré sur les figures, la plaque terminale 13 est prolongée, vers l'aval, par un diffuseur 17 qui assure la liaison fixe entre l'enveloppe externe 31 et la plaque terminale 13. Par exemple, l'enveloppe externe 31 est solidarisée mécaniquement, par tout moyen approprié, au diffuseur 17, ce dernier étant notamment emmanché à l'intérieur de l'enveloppe externe 31, au niveau de l'extrémité amont de cette dernière, tandis que le diffuseur 17 est rapporté accolé à la plaque terminale 13, dans le prolongement axial de cette dernière, et est retenu fixement contre la plaque terminale 13 par un collier de fixation 18.

Quelles que soient les spécificités du diffuseur 17, qui permettent la liaison fixe entre la filière 30 et le fourreau 10, le diffuseur 17 délimite avantageusement une chambre de répartition 17A pour la matière s'écoulant à la jonction entre le fourreau 10 et la filière 30. A l'état assemblé de la machine d'extrusion 1, cette chambre de répartition 17A relie l'extrémité aval de l'alésage 15 de la plaque terminale 13 à l'extrémité amont 33A du canal 33. La chambre de répartition 17A fait ainsi s'écouler la matière, qui sort de la plaque terminale 13 de manière centrée sur l'axe X-X, jusqu'à l'extrémité amont 33A du canal 33. Afin que la matière entrant dans l'extrémité amont 33A du canal 33 soit répartie sur toute l'étendue, autour de l'axe X-X, de cette extrémité amont 33A, la chambre de répartition 17A est façonnée de manière à distribuer la matière autour de l'axe X-X dans l'extrémité amont 33A du canal 33 : à cet effet, dans l'exemple considéré sur les figures, la chambre de répartition 17A est pourvue d'une surface tronconique 17B, qui est centrée sur l'axe X-X et qui diverge vers l'aval, en reliant une extrémité amont de la chambre de répartition 17A à la face intérieure 31A de l'enveloppe externe 31.

A la différence de l'enveloppe externe 31, l'organe interne 32 n'est pas prévu fixe par rapport au fourreau 10, mais est prévu rotatif autour de l'axe X-X de sorte que, au sein de la filière 30, l'organe interne 32 est monté rotatif autour de l'axe X-X par rapport à l'enveloppe externe 31. Ainsi, la face extérieure 32A de l'organe interne 32 est tournante sur elle-même autour de l'axe X-X.

Suivant un mode de réalisation avantageux, qui est mis en oeuvre sur les figures, l'organe interne 32 comporte deux parties distinctes 32.1 et 32.2 délimitant des parties respectives du canal 33, qui se succèdent l'une à l'autre suivant l'axe X-X. Ainsi, la partie 32.1 délimite une partie amont du canal 33, en portant une partie correspondante de la face extérieure 32A de l'organe interne 32, tandis que la partie 32.2 délimite une partie aval du canal 33, immédiatement adjacente à la partie amont précitée du canal, cette partie 32.2 portant le reste de la face extérieure 32A. Chacune des parties 32.1 et 32.2 est rotative de manière indépendante de l'autre partie, de sorte que les parties 32.1 et 32.2 peuvent tourner autour de l'axe X-X à des vitesses respectives qui sont différentes l'une de l'autre et/ou dans des sens respectifs qui sont opposés l'un à l'autre.

Dans l'exemple de réalisation considéré sur les figures, la partie 32.1 comprend à la fois un arbre central 32.3, qui est centré sur l'axe X-X et dont une partie amont est agencée à l'intérieur de l'enveloppe externe 31 tandis qu'une partie aval de cet arbre central 32.3 est située à l'extérieur de l'enveloppe externe 31, et une pièce d'étagement 32.4, qui est agencée à l'intérieur de l'enveloppe externe 31, en étant solidaire de la partie amont de l'arbre central 32.3. La pièce d'étagement 32.4 délimite la partie amont précitée du canal 33, en portant une partie correspondante de la face extérieure 32A de l'organe interne 32. La partie 32.2 comporte, quant à elle, à la fois un arbre tubulaire 32.5, qui est centré sur l'axe X-X et dont une partie amont est agencée à l'intérieur de l'enveloppe externe 31 tandis qu'une partie aval de cet arbre tubulaire 32.5 est agencée à l'extérieur de l'enveloppe externe 31, et une pièce d'étagement 32.6, qui est agencée à l'intérieur de l'enveloppe externe 31 et qui est solidaire de la partie amont de l'arbre tubulaire 32.5. La pièce d'étagement 32.6 délimite la partie aval précitée du canal 33, en portant une partie correspondante de la face extérieure 32A de l'organe interne 32. L'arbre central 32.3 s'étend à l'intérieur de l'arbre tubulaire 32.5, avec interposition radiale d'un ou de plusieurs paliers 32.7 entre ces arbres 32.3 et 32.5, notamment entre leur partie amont respective et entre leur partie aval respective. Les pièces d'étagement 32.4 et 32.6 sont immédiatement adjacentes l'une à l'autre suivant l'axe X-X, le cas échéant avec interposition axiale d'une interface de découplage entre ces pièces d'étagement, non représentée sur les figures.

Quelle que soit la forme de réalisation de l'organe interne 32, la filière 30 comprend avantageusement une motorisation 35, notamment électrique, adaptée pour entraîner cet organe interne 32 en rotation autour de l'axe X-X. Les spécificités techniques de cette motorisation 35 ne sont pas limitatives de l'invention. Dans l'exemple de réalisation considéré sur les figures, la motorisation 35 inclut deux moteurs 35.1 et 35.2 qui sont respectivement propres à la partie 32.1 et à la partie 32.2 de l'organe interne 32. Ainsi, le moteur 35.1 est prévu pour entraîner la partie 32.1 en rotation autour de l'axe X-X. A cet effet, la sortie du moteur 35.1 est par exemple en prise avec la partie aval de l'arbre central 32.3. Le moteur 35.2 est, quant à lui, prévu pour entraîner la partie 32.2 en rotation autour de l'axe X-X. La sortie de ce moteur 35.2 est par exemple en prise avec la partie aval de l'arbre tubulaire 32.5.

Suivant un aménagement possible, qui est mis en oeuvre sur les figures, l'extrémité amont de l'organe interne 32 est au moins partiellement agencée dans le diffuseur 17, en délimitant, conjointement avec ce dernier, la chambre de répartition 17A. Dans l'exemple envisagé sur les figures, cette extrémité amont de l'organe interne 32 est formée par la pièce d'étagement 32.4 de la partie 32.1 de l'organe interne 32 et présente une surface conique 32.4A, centrée sur l'axe X-X et divergente vers l'aval. Cette surface conique 32.4A est complémentaire de la surface tronconique 17B du diffuseur 17, en étant agencée à l'intérieur de cette surface tronconique 17B de manière à ménager la chambre de répartition 17A entre ces surfaces 32.4A et 17B.

Suivant un autre aménagement possible, également mis en oeuvre dans le mode de réalisation considéré sur les figures, la filière 30 comporte un déflecteur de sortie 36 qui est lié fixement à l'organe interne 32. Ainsi, le déflecteur de sortie 36 est, conjointement avec l'organe interne 32, rotatif autour de l'axe X-X par rapport à l'enveloppe externe 31. La forme de réalisation pour la liaison fixe entre le déflecteur de sortie 36 et l'organe interne 32 n'est pas limitative de l'invention. Dans l'exemple de réalisation considéré sur les figures, le déflecteur de sortie 36 est intégré à la pièce d'étagement 32.6 de la partie 32.2 de l'organe interne 32.

Le déflecteur de sortie 36 est agencé au niveau de l'extrémité aval 33B du canal 33 de manière à exercer une contre-pression vis-à-vis de l'écoulement de la matière sortant du canal 33. En pratique, suivant l'axe X-X, le déflecteur 36 peut occuper soit exactement la même position que l'extrémité aval 33B du canal 33, soit être légèrement décalé en aval de cette extrémité aval 33B comme dans l'exemple envisagé sur les figures. Dans tous les cas, le déflecteur de sortie 36 est conçu pour interférer physiquement, dans la direction de l'axe X-X, avec la matière sortant du canal 33 via l'extrémité aval 33B de ce dernier. Autrement dit, le déflecteur de sortie 36 induit une résistance axiale à l'écoulement de la matière sortant du canal 33. Suivant une forme de réalisation pratique, mise en oeuvre dans l'exemple considéré sur les figures, le déflecteur de sortie 36 est pourvu d'une surface sensiblement tronconique 36A, qui est centrée sur l'axe X-X, en divergeant vers l'aval, et contre laquelle la matière sortant du canal 33 s'écoule.

On va maintenant décrire le fonctionnement de la machine d'extrusion 1.

Les ingrédients de la matière première à extruder sont introduits à l'intérieur du fourreau 10, via au moins l'un de ses éléments 11, puis sont entraînés vers l'aval par les vis 20, tout en étant transformés sous l'effet du traitement thermomécanique appliqué par le fourreau et les vis. La matière sortant de l'élément le plus en aval, parmi les éléments 11, du fourreau 10 est poussée à travers successivement la plaque terminale 13, le diffuseur 17 et la filière 30. La matière entre dans la filière 30 après avoir traversé la chambre de répartition 17A dans laquelle la matière est avantageusement distribuée autour de l'axe X-X par le diffuseur 17. A l'intérieur de la filière 30, la matière s'écoule dans le canal 33, depuis l'extrémité amont 33A de ce dernier jusqu'à son extrémité aval 33B. La matière sort de la filière 30 en s'échappant de l'extrémité aval 33B du canal 33, après avoir avantageusement été retenue par contre-pression sous l'effet du déflecteur de sortie 36.

Au fur et à mesure de son écoulement le long du canal 33, la matière est cisaillée par deux composantes de cisaillement différentes, qui se cumulent, à savoir une première composante de cisaillement résultant de l'adhésion de la matière à la face intérieure 31A de l'enveloppe externe 31 du fait du refroidissement qu'applique l'enveloppe externe 31 à la matière au travers de cette face intérieure 31A, et une seconde composante de cisaillement résultant de l'enroulement de la matière autour de la face extérieure 32A de l'organe interne 32 du fait de l'entraînement en rotation autour de l'axe X-X de l'organe interne 32 par la motorisation 35. Il en résulte une fibration substantielle de la matière s'écoulant dans le canal 33, cette fibration étant opérée sous le double effet du refroidissement de la matière, commandé par la thermorégulation de l'enveloppe externe 31, et de l'enroulement de l'écoulement de matière, provoqué par la mise en rotation de l'organe interne 32. Ainsi, la matière sortant de l'extrémité aval du canal 33 présente une texturation qualitative et quantitative, même si, du fait de la dimension axiale limitée du canal 33, son temps de traitement dans la filière 30 est court, notamment comparativement à des filières existantes utilisées pour obtenir une texturation similaire. La machine d'extrusion 1 permet donc de préparer en continu, à partir de la matière première, des produits alimentaires de différentes structures fibreuses à partir d'une matière extrudée riche en protéines et en eau.

Il est possible de modifier le taux de cisaillement appliqué à la matière s'écoulant dans le canal 33 et donc de modifier les caractéristiques de la fibration en jouant sur les vitesses et/ou sens de rotation respectifs des parties 32.1 et 32.2 de l'organe interne 32 et/ou en jouant sur les profils de température respectifs qui sont appliqués par l'intermédiaire des conduits 31.1 et 31.2 de l'enveloppe externe 31. Ainsi, en commandant la thermorégulation opérée par l'enveloppe externe 31 et/ou la mise en rotation de l'organe interne 32, la filière 30 est pilotable, dans le sens où elle permet d'obtenir un produit alimentaire présentant diverses textures, et ce de manière contrôlée et reproductible.

Divers aménagements et variantes à la machine d'extrusion 1 décrite jusqu'ici sont par ailleurs envisageables. A titre d'exemples :
- l'organe interne 32 peut être équipé, dans sa partie aval s'étendant à l'extérieur de l'enveloppe externe 31, d'un outil de morcellement de la matière sortant de la filière 30 ; la filière 30 envisagée sur les figures comporte un tel outil de morcellement, qui est référencé 37 et dont les spécificités de réalisation ne sont pas limitatives, étant uniquement noté que cet outil de morcellement met à profit l'entraînement en rotation de l'organe interne 32 pour agir sur la matière sortant du canal 33 ; et/ou
- des moyens de couplage mécanique réversible peuvent être prévus entre une partie aval de l'organe interne 32, qui s'étend à l'extérieur de l'enveloppe externe 31 et qui est en prise avec la motorisation 35, et le reste de l'organe interne 32 ; de cette façon, cette partie aval de l'organe interne 32 peut être temporairement dégagée du reste de la filière 30, par exemple à des fins de nettoyage ou de maintenance de la filière.

## Revendications

1. Filière (30) pour l'extrusion d'une matière riche en protéines et en eau, comprenant :
- une enveloppe externe (31), qui est tubulaire, en étant centrée sur un axe (X-X), et qui est thermorégulée, et
- un organe interne (32), qui est agencé coaxialement à l'intérieur de l'enveloppe externe (31) et qui est monté rotatif autour de l'axe (X-X) par rapport à l'enveloppe externe (31), de manière que :
- une partie aval de l'organe interne s'étend à l'extérieur de l'enveloppe externe (31) et est en prise avec une motorisation (35) adaptée pour entraîner l'organe interne en rotation autour de l'axe (X-X),
la filière étant **caractérisée par le fait qu'**
est délimité, entre l'enveloppe externe et l'organe interne, un canal (33) ayant une section transversale qui est annulaire et centrée sur l'axe (X-X), lequel canal présente une extrémité amont (33A) et une extrémité aval (33B), qui sont opposées l'une à l'autre suivant l'axe et entre lesquelles la matière s'écoule dans le canal, de manière que lorsque la matière est poussée à travers la filière, la matière progresse dans le canal depuis l'extrémité amont jusqu'à l'extrémité aval par laquelle la matière sort axialement du canal.

2. Filière suivant la revendication 1, dans laquelle l'enveloppe externe (31) est pourvue de moyens de thermorégulation (31.1, 31.2) adaptés pour appliquer un profil de température le long du canal (33) entre les extrémités amont (33A) et aval (33B).

3. Filière suivant la revendication 2, dans laquelle le profil de température qui est appliqué par les moyens de thermorégulation (31.1, 31.2) est prévu pour refroidir la matière s'écoulant dans le canal (33) au fur et à mesure de sa progression dans le canal.

4. Filière suivant la revendication 2 ou 3, dans laquelle les moyens de thermorégulation (31.1, 31.2) sont intégrés à deux modules distincts qui se succèdent suivant l'axe (X-X) de manière juxtaposée.

5. Filière suivant l'une quelconque des revendications précédentes, dans laquelle l'organe interne (32) comprend au moins deux parties distinctes (32.1, 32.2), qui délimitent des parties respectives du canal (33), se succédant l'une à l'autre suivant l'axe (X-X), et qui sont rotatives autour de l'axe de manière indépendante l'une de l'autre.

6. Filière suivant la revendications 5, dans laquelle la motorisation (35) comprend plusieurs moteurs (35.1, 35.2) qui sont respectivement propres à chaque partie (32.1, 32.2) de l'organe interne (32).

7. Filière suivant l'une quelconque des revendications précédentes, dans laquelle la filière (30) comporte un déflecteur de sortie (36), qui est lié fixement à au moins une partie (32.2) de l'organe interne (32) et qui est agencé au niveau de l'extrémité aval (33B) du canal (33) de manière à exercer une contre-pression vis-à-vis de l'écoulement de la matière sortant du canal.

8. Filière suivant l'une quelconque des revendications précédentes, dans laquelle l'organe interne (32) est équipé d'un outil de morcellement (37) agencé à l'extérieur de l'enveloppe externe (31) de manière à agir sur la matière sortant du canal (33).

9. Filière suivant l'une quelconque des revendications précédentes, dans laquelle la section transversale du canal (33) est constante entre les extrémités amont (33A) et aval (33B) du canal.

10. Machine d'extrusion (1), comportant :
- un fourreau (10) à l'intérieur duquel est entraînée au moins une vis (20) de manière à appliquer un traitement thermomécanique à une matière riche en protéines et en eau, et
- une filière (30), qui est conforme à l'une quelconque des revendications précédentes et dont l'enveloppe externe (31) est liée fixement au fourreau (10) de manière que la matière sortant du fourreau est poussée par la ou les vis à travers la filière.

11. Machine d'extrusion suivant la revendication 10, dans laquelle la machine d'extrusion (1) comporte également :
- une plaque terminale (13), qui est rapportée fixement à une extrémité aval du fourreau (10) et qui délimite intérieurement un alésage (15) traversant, centré sur l'axe (X-X) et canalisant la matière poussée par la ou les vis (20), et
- un diffuseur (17), qui lie fixement la plaque terminale (13) et l'enveloppe externe (31) et qui délimite une chambre de répartition (17A) reliant l'alésage (15) de la plaque terminale et l'extrémité amont (33A) du canal (33), cette chambre de répartition étant façonnée de manière à distribuer la matière autour de l'axe (X-X) dans l'extrémité amont du canal.

12. Système de préparation en continu d'un produit alimentaire extrudé, comprenant :
- une machine d'extrusion suivant l'une des revendications 10 ou 11, et
- une matière première, qui est riche en protéines et en eau et à laquelle est appliqué le traitement thermomécanique après introduction dans le fourreau (10).

## Patentansprüche

1. Düse (30) zum Extrudieren eines protein- und wasserreichem Materials, umfassend:
- eine äußere Hülle (31), die rohrförmig ist, indem sie auf einer Achse (X-X) zentriert ist, und die temperaturreguliert ist, und
- ein inneres Element (32), das koaxial im Inneren der äußeren Hülle (31) angeordnet ist und um die Achse (X-X) in Bezug auf die äußere Hülle (31) drehbar montiert ist, sodass:
- sich ein stromabwärtiger Teil des inneren Elements nach außerhalb der äußeren Hülle (31) erstreckt und mit einem Antrieb (35) in Eingriff ist, der angepasst ist, um das innere Element um die Achse (X-X) in Drehung zu versetzen,
wobei die Düse **dadurch gekennzeichnet ist, dass**
zwischen der äußeren Hülle und dem inneren Element ein Kanal (33) begrenzt ist, der einen Querschnitt aufweist, der ringförmig und auf der Achse (X-X) zentriert ist, wobei der Kanal ein stromaufwärtiges Ende (33A) und ein stromabwärtiges Ende (33B) aufweist, die einander entlang der Achse gegenüberliegen und zwischen denen das Material in dem Kanal fließt, sodass, wenn das Material durch die Düse gepresst wird, das Material in dem Kanal von dem stromaufwärtigen Ende zu dem stromabwärtigen Ende fortschreitet, durch das das Material axial aus dem Kanal austritt.

2. Düse nach Anspruch 1, wobei die äußere Hülle (31) mit Temperaturregulierungseinrichtungen (31.1, 31.2) versehen ist, die angepasst sind, um ein Temperaturprofil entlang des Kanals (33) zwischen dem stromaufwärtigen (33A) und dem stromabwärtigen (33B) Ende anzuwenden.

3. Düse nach Anspruch 2, wobei das Temperaturprofil, das durch die Temperaturregulierungseinrichtungen (31.1, 31.2) angewendet wird, dazu bereitgestellt ist, um das durch den Kanal (33) fließende Material abzukühlen, während es durch den Kanal fortschreitet.

4. Düse nach Anspruch 2 oder 3, wobei die Temperaturregulierungseinrichtungen (31.1, 31.2) in zwei verschiedene Module integriert sind, die entlang der Achse (X-X) nebeneinander angeordnet sind.

5. Düse nach einem der vorherigen Ansprüche, wobei das innere Element (32) mindestens zwei verschiedene Teile (32.1, 32.2) umfasst, die jeweilige Teile des Kanals (33) begrenzen, entlang der Achse (X-X) aufeinander folgen und unabhängig voneinander um die Achse drehbar sind.

6. Düse nach Anspruch 5, wobei der Antrieb (35) mehrere Motoren (35.1, 35.2) umfasst, die jeweils für jeden Teil (32.1, 32.2) des inneren Elements (32) spezifisch sind.

7. Düse nach einem der vorherigen Ansprüche, wobei die Düse (30) einen Austrittsdeflektor (36) umfasst, der fest mit mindestens einem Teil (32.2) des inneren Elements (32) verbunden ist und an dem stromabwärtigen Ende (33B) des Kanals (33) angeordnet ist, um einen Gegendruck gegenüber dem aus dem Kanal austretenden Materialstrom auszuüben.

8. Düse nach einem der vorherigen Ansprüche, wobei das innere Element (32) mit einem Zerkleinerungswerkzeug (37) ausgestattet ist, das außerhalb der äußeren Hülle (31) angeordnet ist, um auf das aus dem Kanal (33) austretende Material zu wirken.

9. Düse nach einem der vorherigen Ansprüche, wobei der Querschnitt des Kanals (33) zwischen dem stromaufwärtigen (33A) und dem stromabwärtigen (33B) Ende des Kanals konstant ist.

10. Extrusionsmaschine (1), umfassend:
- eine Hülse (10), in der mindestens eine Schnecke (20) angetrieben wird, um ein protein- und wasserreiches Material einer thermomechanischen Behandlung zu unterziehen, und
- eine Düse (30), die einem der vorherigen Ansprüche entspricht und deren äußere Hülle (31) fest mit der Hülse (10) verbunden ist, sodass das aus der Hülse austretende Material durch die Schnecke(n) durch die Düse gepresst wird.

11. Extrusionsmaschine nach Anspruch 10, wobei die Extrusionsmaschine (1) auch Folgendes umfasst:
- eine Abschlussplatte (13), die fest an einem stromabwärtigen Ende der Hülse (10) angebracht ist und innen eine durchgehende Bohrung (15) begrenzt, die auf der Achse (X-X) zentriert ist und das von der oder den Schnecken (20) gepresste Material kanalisiert, und
- einen Diffusor (17), der die Abschlussplatte (13) und die äußere Hülle (31) fest miteinander verbindet und eine Verteilerkammer (17A) begrenzt, die die Bohrung (15) der Abschlussplatte und das stromaufwärtige Ende (33A) des Kanals (33) verbindet, wobei diese Verteilerkammer geformt ist, um das Material um die Achse (X-X) in das stromaufwärtige Ende des Kanals zu verteilen.

12. System zur kontinuierlichen Herstellung eines extrudierten Nahrungsmittels, umfassend:
- eine Extrusionsmaschine nach einem der Ansprüche 10 oder 11, und
- ein Rohmaterial, das reich an Proteinen und Wasser ist und auf das die thermomechanische Behandlung angewendet wird, nachdem es in die Hülse (10) eingeführt wurde.

## Claims

1. A nozzle (30) for extruding a material rich in protein and water, comprising:
- an outer casing (31) which is tubular, centered on an axis (X-X), and which is thermoregulated, and
- an internal component (32) which is arranged coaxially inside the outer casing (31) and which is mounted so as to rotate about the axis (X-X) with respect to the outer casing (31), so that:
- a downstream part of the internal component extends outside the outer casing (31) and is engaged with a motorization (35) suitable for rotating the internal component about the axis (X-X),
the nozzle being **characterized in that** a channel (33) is delimited between the outer casing and the internal component, the channel (33) having a cross-section that is annular, centered on the axis (X-X), and the channel having an upstream end (33A) and a downstream end (33B), which are axially opposed to each other and between which the material flows into the channel, so that when the material is pushed through the nozzle, the material advances through the channel from the upstream end to the downstream end through which the material axially comes out of the channel.

2. The nozzle according to claim 1, wherein the outer casing (31) is provided with thermoregulation means (31.1, 31.2) suitable for applying a temperature profile along the channel (33) between the upstream end (33A) and the downstream end (33B).

3. The nozzle according to claim 2, wherein the temperature profile applied by the thermoregulation means (31.1, 31.2) is intended for cooling the material flowing through the channel (33) as same advances through the channel.

4. The nozzle according to claim 2 or 3, wherein the thermoregulation means (31.1, 31.2) are integrated into two distinct modules which succeed one another along the axis (X-X), in juxtaposed manner.

5. The nozzle according to any of the preceding claims, wherein the internal component (32) comprises at least two distinct portions (32.1, 32.2) which define respective portions of the channel (33), succeeding one another along the axis (X-X), and which can rotate about the axis independently of one another.

6. The nozzle according to claim 5, wherein the motorization (35) comprises a plurality of motors (35.1, 35.2) which are correspondingly specific to each part (32.1, 32.2) of the internal component (32).

7. The nozzle according to any of the preceding claims, wherein the nozzle (30) has an outlet deflector (36), which is linked in a fixed manner to at least one part (32.2) of the internal component (32) and which is arranged at the downstream end (33B) of the channel (33) so as to exert a counter-pressure against a flow of the material coming out of the channel.

8. The nozzle according to any of the preceding claims, wherein the internal component (32) is equipped with a chopping tool (37) arranged outside the outer casing (31) so as to act on the material coming out of the channel (33).

9. The nozzle according to any of the preceding claims, wherein the cross-section of the channel (33) is constant between the upstream end (33A) and the downstream end (33B) of the channel.

10. An extrusion machine (1), including:
- a sleeve (10) inside which at least one screw (20) is driven so as to apply a thermomechanical treatment to a material rich in protein and water, and
- a nozzle (30), which is according to any of the preceding claims and of which the outer casing (31) is linked in a fixed manner to the sleeve (10) so that the material coming out of the sleeve is pushed by the at least one screw through the nozzle.

11. The extrusion machine according to claim 10, wherein the extrusion machine (1) further includes:
- an end plate (13), which is directly mounted in a fixed manner to a downstream end of the sleeve (10) and which internally delimits a through bore (15), centered on the axis (X-X), channeling the material pushed by the at least one screw (20), and
- a divergent nozzle (17), which fixedly links the end plate (13) and the outer casing (31) and which delimits a distribution chamber (17A) connecting the through bore (15) of the end plate and the upstream end (33A) of the channel (33), the distribution chamber being shaped so as to distribute the material around the axis (X-X) in the upstream end of the channel.

12. A system for continuous preparation of an extruded food product, comprising:
- an extrusion machine according to one of claims 10 or 11, and
- a raw material, which is rich in protein and water and to which a thermomechanical treatment is applied after insertion into the sleeve (10).
